# EUROPEAN PATENT SPECIFICATION

(11) **EP 1 748 222 B1**
(45) Date of publication and mention of the grant of the patent: **20.10.2010**
(21) Application number: 05425542.7
(22) Date of filing: 25.07.2005
(51) Int. Cl.: F16H 7/08

(54) **Tensioner for a timing chain**
Spanner für eine Steuerkette
Tendeur pour une chaîne de distribution

(43) Date of publication of application: 31.01.2007
(73) Proprietor: Morse Tec Europe S.r.l., 20121 Milano (IT)
(72) Inventor: Redaelli, Daniele, 23807 Merate-LC- (IT); Caprotti, Lorenzo, 20050 Lesmo-MI- (IT); Arosio, Emanuele, 20058 Villasanta-MI- (IT)
(74) Representative: Coggi, Giorgio

(56) References cited:
- DE-U1- 7 809 294
- US-A- 3 426 606
- US-A- 4 948 315
- US-A- 5 601 505
- US-A- 5 676 614
- US-B1- 6 422 964

## Description

The present invention refers to a device, made at least partially of plastic material, designed to block reversibly a tensioner intended to tension the chain of the timing system of an engine, in particular of an internal combustion engine.

US 5676614 discloses a tensioner having the features of the preamble of claim 1.

The timing system of an internal combustion engine can be controlled by means of a chain transmission, in which the chain is wound on two or more sprockets, one of which is a drive sprocket and takes its drive (even indirectly) from the drive shaft to transmit it, by means of the chain and of one or more driven sprockets, to one or more driven shafts.

Since for reasons of adjustment, wear of materials and/or of take-up of the slack it is often necessary to compensate for a certain slack on the chain, use is known to the art of shoe-type tensioning devices, in which a shoe is biased with an adjustable force against a branch of the chain, generally known as the "slack branch".

The most frequently used tensioning devices are hydraulic or mechanical tensioners, in which a fixed element (generally a cylinder) is mounted on the engine block and a moveable element (generally a piston, moveable inside the cylinder) is slideable with respect to the fixed element and acts against the shoe placed in contact with the chain to tension it.

In these tensioning devices the piston is biased out of the cylinder, towards the shoe disposed against a branch of the chain, at least by the action of a spring placed inside the cylinder.

When the tensioner is not installed, for example during transport and/or during possible replacement, the spring biases the piston (often with considerable force) out of the cylinder; to overcome this drawback means have been provided (consisting, for example, of a pin inserted in a through hole formed in the body of the piston and in a pair of holes made in the wall of the cylinder and aligned with the through hole formed in the piston) designed to lock the piston mechanically inside the cylinder at least during the transport of the tensioner.

Said known locking means present the serious drawback that, when they are removed, the spring violently expels (or tends to expel) the piston from the cylinder: this can make the installation of the tensioner difficult and represents (or can represent) a source of danger for those carrying out the operation.

Furthermore, it is practically impossible (or in any case very difficult and laborious) to re-install the known locking means before removing the tensioner for any reason (for example, to carry out the maintenance and/or the replacement of the tensioner and/or of the chain): the position (normally awkward) of the tensioner and the action of the spring on the piston make (or can make) this operation a source of danger for those carrying it out.

The locking device forming the subject matter of the present invention is free from the above limits and defects since it remains connected to the tensioner even when the tensioner is installed, it allows the tensioner to be locked again, if necessary, and in any case it limits the stroke of the piston with respect to the cylinder, avoiding the expulsion thereof.

Object of the present invention is to produce the above mentioned reversible locking device; this object is achieved by means of a tensioner which has the characterising features illustrated in claim 1.

Further advantageous characteristics of the invention form the subject matter of the dependent claims.

The invention will now be described with reference to a purely exemplifying (and therefore non limiting) embodiment thereof, illustrated in the appended figures, in which:
- Figure 1 shows diagrammatically a perspective view of a tensioner locked for the transport by a locking device produced according to the invention;
- Figure 2 shows diagrammatically a perspective bottom view of the tensioner and of the locking device of Figure 1;
- Figures 3 and 4 show diagrammatically two enlarged details of the locking device of Figure 1;
- Figure 5 shows diagrammatically a perspective view of the tensioner, inserted in a timing chain, with the locking device disabled;
- Figure 6 shows diagrammatically a perspective view of the tensioner of Figure 5, in which the chain has been omitted;
- Figure 7 shows diagrammatically another perspective view (rotated 180°) of the tensioner of Figure 6;
- Figures 8 and 9 show diagrammatically two perspective views of the tensioner of Figure 5 when the chain has a lot of slack.

In the appended figures like elements will be denoted by the same reference numerals.

In the embodiment described herein the locking device is combined with a hydraulic tensioner but, without departing from the scope of the invention, it can be combined with another type of tensioner, for example with a mechanical tensioner.

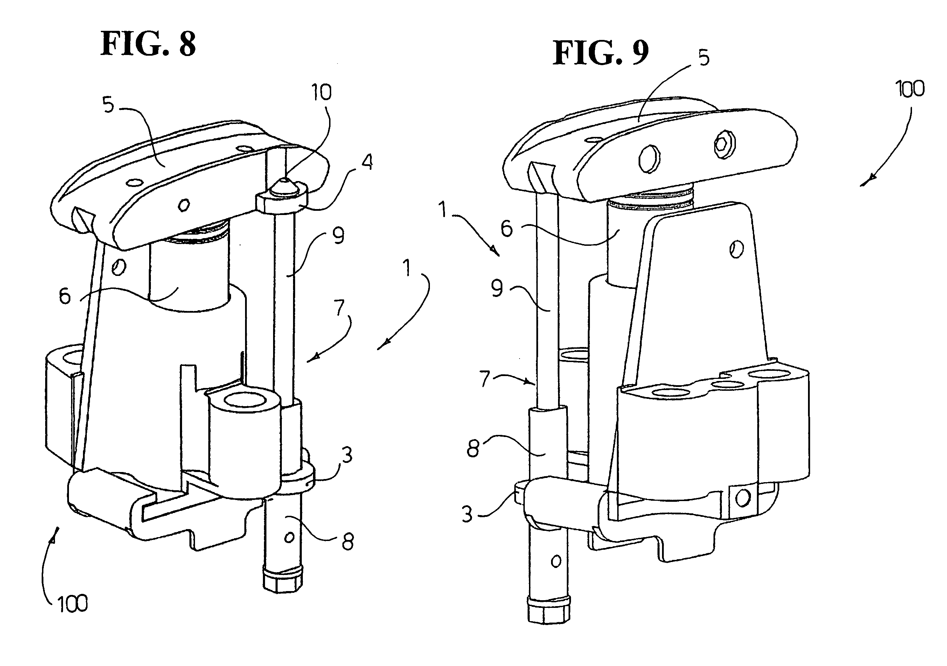

The locking device 1 illustrated in the appended figures comprises, in combination with each other:
- a body 3, integral with the tensioner 100 and protruding with respect to the body of the tensioner 100, which has a shaped slot 2;
- a perforated protrusion 4, integral with the shoe 5 carried by the piston 6 (Figures 8 and 9) and protruding with respect to the shoe 5 so that the hole thereof is aligned with that of the shaped slot 2;
- a rod 7, having a first part 8 with a shape complementary to that of the shaped slot 2 and a second part 9 bearing at the end means 10 designed to couple irreversibly it with the perforated protrusion 4 integral with the shoe 5.

The rod 7 is preferably made of plastic material, the perforated protrusion 4 is made of the plastic material used to make or to coat the shoe 5, and the body 3, made in one piece with the body of the tensioner 100, is made of a metal material or of an aluminium alloy; without departing from the scope of the invention the body 3 also can be made of a plastic material and applied to the tensioner 100.

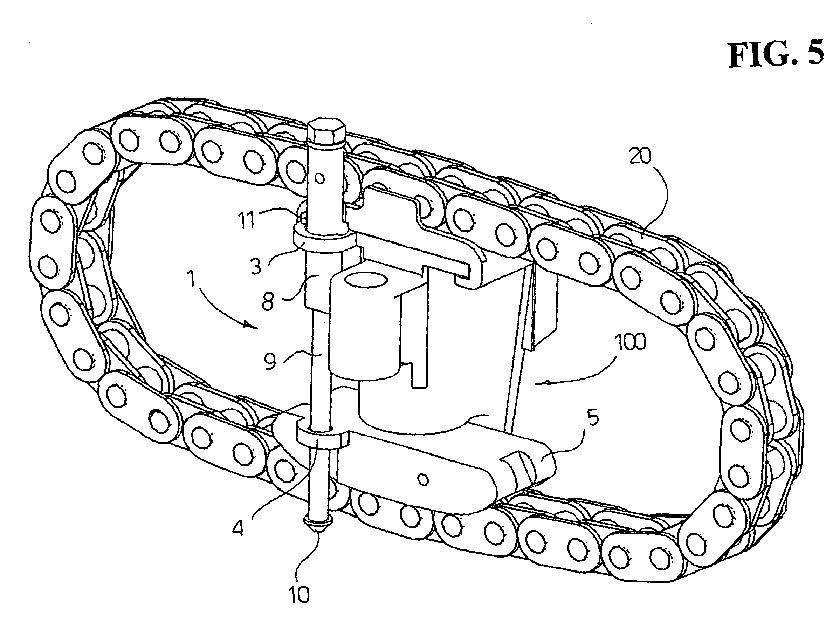

The first part 8 of the rod 7 has means 11 designed to limit the stroke thereof in the shaped slot 2, when the tensioner 100 is disabled; the stroke of the first part 8 in the shaped slot 2 is advantageously greater than the stroke of the piston 6 when the tensioner 100 is disabled and the chain 20 (Figure 5) is slack.

The second part 9 of the rod 7 is advantageously cylindrical, bears at one end a conical portion 10 designed to be inserted irreversibly in the hole 4 and has a slightly greater (and, in any case, not smaller) length than that of the tensioner 100 in transport conditions, that is with the piston 6 (almost completely) withdrawn inside the cylinder.

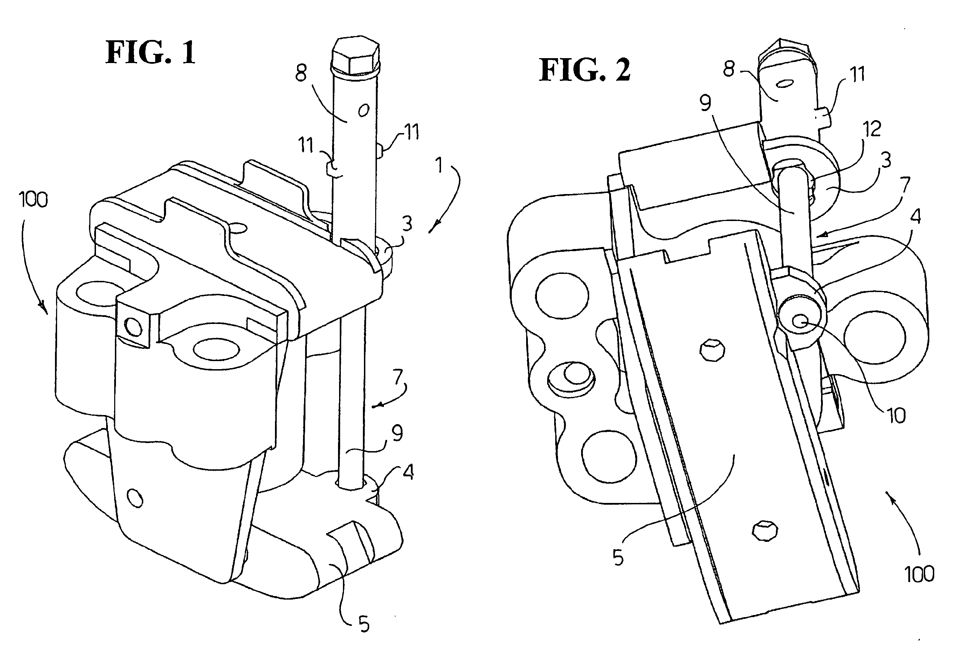

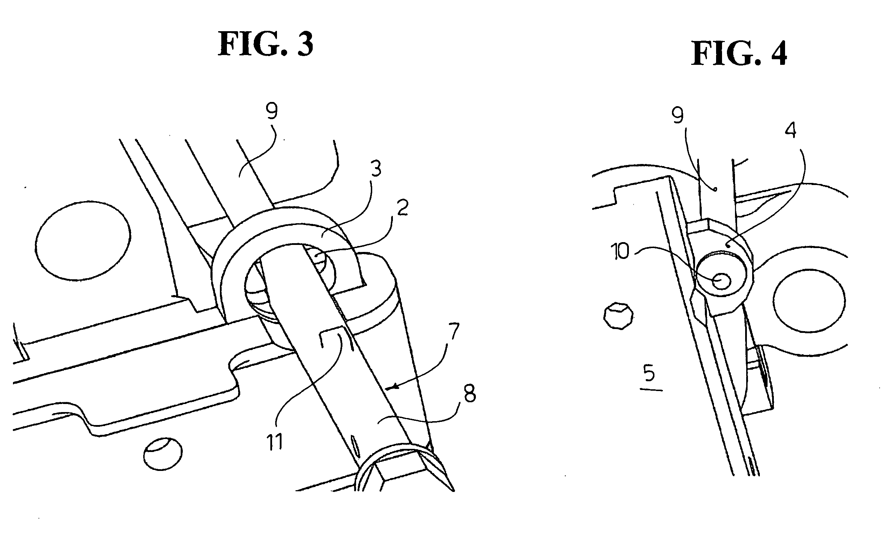

Figure 1 shows diagrammatically a perspective view of the tensioner 100 locked for transport by a locking device 1 made according to the invention; Figure 1 shows:
- the body 3, integral with the tensioner 100, bearing the shaped slot 2 (seen better in Figure 3);
- the perforated protrusion 4, integral with the shoe 5 and protruding with respect to said shoe so that its hole is aligned with the shaped slot 2;
- the rod 7, having the first part 8 (with a shape complementary to that of the shaped slot 2) and the second part 9 (preferably cylindrical) which bears at one end the conical portion 10 (Figure 2) designed to couple it irreversibly to the perforated protrusion 4 of the shoe 5; the two parts (8, 9) of the rod 7 are advantageously joined to each other by an surface 12 (Figure 2) which rests against the body 3 when the tensioner 100 is locked;
- a pair of protrusions 11 (diametrically opposed and having a greater length than the major axis of the shaped slot 2) present on the first part 8 of the rod 7 which constitute the means able to limit (as will be illustrated with reference to Figures 8 and 9) the stroke of the first part 8 in the shaped slot 2 when the locking device 1 is disabled, said stroke being greater than the maximum stroke of the piston 6 when the locking device 1 is disabled.

Figure 2 shows diagrammatically a perspective bottom view of the tensioner 100 and of the locking device 1 of Figure 1; in Figure 2 the body 3 having the shaped slot 2 and the conical portion 10 situated at the end of the part 9 of the rod 7 and designed to be inserted irreversibly in the hole of the protrusion 4 can be seen better.

The joining surface 12 between the first and the second part (8, 9) of the rod 7, which rests against the body 3 preventing the spring of the tensioner 100 from biasing the piston 6 out of the cylinder, can also be glimpsed through the slot 2.

Figure 3 shows diagrammatically an enlarged detail of the locking device 1 of Figure 1; in Figure 3 the body 3 bearing the shaped slot 2, the first part 8 of the rod 7 - bearing the protrusions 11 (only one of which is visible in Figure 3) and rotated so that the joining surface 12 rests against the body 3 - and a part of the second part 9 of the rod 7 can be seen.

Figure 4 shows diagrammatically, enlarged, the conical portion 10 situated at the end of the part 9 of the rod 7 and engaged irreversibly in the hole present in the protrusion 4 integral with the shoe 5.

Figure 5 shows diagrammatically a perspective view of the tensioner 100, inserted in the chain 20, in which the locking device 1 has been disabled by rotating the rod 7 to allow the second part 9 of the rod 7 to pass through the shaped slot 2 present in the body 3.

Normally, if the chain 20 is not slack because of wear, the piston 6 tensions the chain 20 - which rests on the shoe 5 - protruding very little (as shown in Figures 5-7) from the cylinder of the tensioner 100; in Figure 5 the protrusions 11 rest on the body 3 which bears the shaped slot 2 whilst the conical portion 10 is not in contact with the perforated protrusion 4 but, without departing from the scope of the invention, the protrusions 11 can be raised with respect to the body 3 whilst the conical portion 10 is in contact with the perforated protrusion 4 or the rod 7 is in an intermediate position between the two positions previously described.

In any case the locking device 1 does not interfere either with the movements of the piston 6 (and of the shoe 5, integral therewith) during the normal operation of the chain 20 tensioned by the tensioner 100 or with the operation of the chain 20.

For simplicity of the graphic representation, in Figure 5 the sprockets (drive and idle) on which the chain 20 is wound have been omitted.

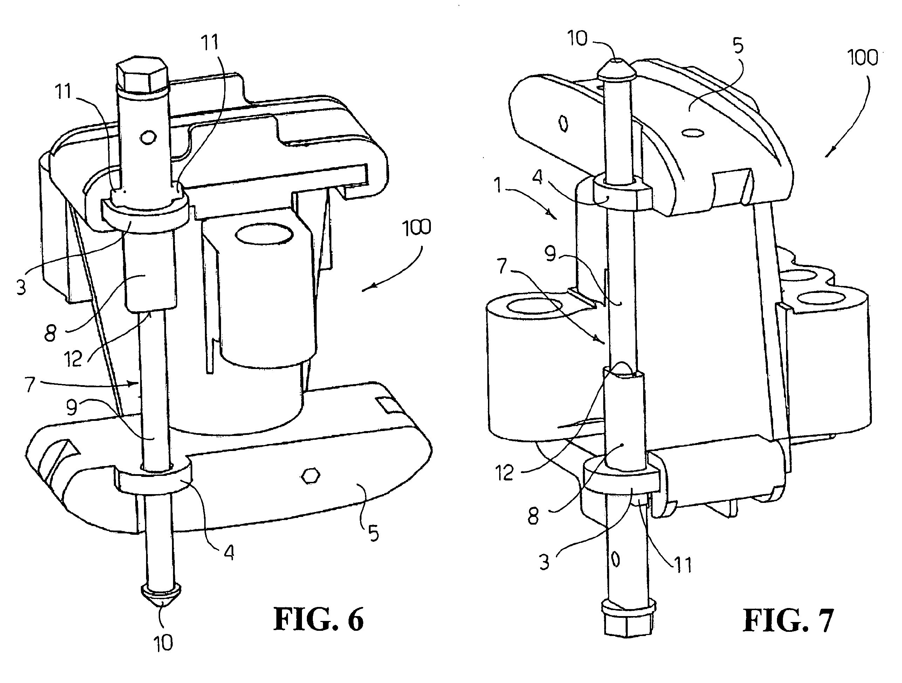

Figure 6 shows diagrammatically a perspective view of the tensioner 100 of Figure 5, in which the chain 20 has been omitted for simplicity of the graphic representation.

In Figure 6 the tensioner 100, the first part 8 of the rod 7 whose protrusions 11 rest on the body 3, the joining surface 12 between the first and the second part (8, 9) of the rod 7 and the second part 9 of the rod 7, whose conical portion 10 is not in contact with the perforated protrusion 4, can be seen.

Figure 7 shows diagrammatically another perspective view (rotated 180° with respect to that of Figure 6) of the tensioner 100 of Figure 6, with the locking device 1 disabled.

Figures 8 and 9 show diagrammatically two perspective views of the tensioner 100 of Figure 5 in which the locking device 1 prevents the piston 6 from coming out of the cylinder completely when the chain 20 has a lot of slack, for example by wear.

In fact, as shown in Figures 8 and 9, to compensate for the slack on the chain 20 the piston 6 gradually goes out of the cylinder but the stroke of the piston 6, when the tensioner 100 is disabled and the chain 20 is slack, is limited by the protrusions 11 of the first part 8 of the rod 7 which rest on the body 3 and by the conical portion 10 situated at the end of the second part 9 of the rod 7, which is in contact with the perforated protrusion 4.

The locking device 1 is a reversible device since, if the tensioner 100 has to be removed, it is possible to lock the device 1 again by exerting traction on the end of the first part 8 of the rod 7 to cause the first part 8 to leave the shaped slot 2 and by rotating said rod to make the joining surface 12 of the rod 7 to rest against the body 3, returning the tensioner 100 to the transport condition (Figures 1 and 2).

Without departing from the scope of the invention, the body 3 having the shaped slot 2 can be integral with the shoe 5 and can be made of the plastic material used to make or to coat the shoe 5, the perforated protrusion 4 can be integral with the tensioner 100 and the rod 7 is rotated 180° with respect to the positions shown in the appended figures.

Again without departing from the scope of the invention, a person skilled in the art can make to the reversible locking device forming the subject matter of the invention all those changes and improvements which are suggested by experience or by the natural evolution of the art.

## Claims

1. A tensioner (100) for a timing chain (20), with a reversible locking device (1), the tensioner having a tensioner body, a tensioner piston (6), and a shoe (5) carried by the tensioner piston (6); **characterised in that**:
the reversible locking device (1) comprises:
- a body (3) having a shaped slot (2);
- a perforated protrusion (4) having its hole aligned with the shaped slot (2); and
- a rod (7), having a first part (8) with a shape complementary to that of the shaped slot (2) and a second part (9) bearing at one end means (10) designed to couple it irreversibly to the perforated protrusion (4);
wherein one of the body (3) and the perforated protrusion (4) is integral with the tensioner (100) and protrudes with respect to the tensioner body and the other of the body (3) and the perforated protrusion (4) is integral with the shoe (5) and protrudes with respect to the shoe (5).

2. A tensioner according to claim 1, wherein the body (3) is integral with the tensioner (100) and protrudes with respect to the tensioner body and the perforated protrusion (4) is integral with the shoe (5) and protrudes with respect to the shoe (5).

3. A tensioner according to claim 1, wherein the perforated protrusion (4) is integral with the tensioner (100) and protrudes with respect to the tensioner body and the body (3) is integral with the shoe (5) and protrudes with respect to the shoe (5).

4. A tensioner according to claim 2, further **characterised in that** the rod (7) is made of plastic material and **in that** the perforated protrusion (4) is made of the plastic material used to make or to coat the shoe (5).

5. A tensioner according to claim 2, further **characterised in that** the body (3) is made in one piece with the body of the tensioner (100).

6. A tensioner according to claim 2, further **characterised in that** the body (3) is made of plastic material and applied to the tensioner (100).

7. A tensioner according to claim 3, further **characterised in that** the rod (7) is made of plastic material and the body (3) is made of the plastic material used to make or to coat the shoe (5).

8. A tensioner according to at least one of the preceding claims, further **characterised in that** the first part (8) of the rod (7) has means (11) designed to limit the stroke thereof in the shaped slot (2) when the tensioner (100) is disabled.

9. A tensioner according to claim 8, further **characterised in that** the means (11) consist of a pair of protrusions, diametrically opposed and of a greater length than the major axis of the shaped slot (2), present on the first part (8) of the rod (7).

10. A tensioner according to claim 9, further **characterised in that** the stroke of the first part (8) in the shaped slot (2) when the tensioner (100) is disabled is limited by the protrusions (11) and is greater than the stroke of the piston (6) when the tensioner (100) is disabled and the chain (20) is slack.

11. A tensioner according to at least one of the preceding claims, further **characterised in that** the second part (9) of the rod (7) is cylindrical and bears at one end a conical portion (10) designed to be inserted irreversibly in the perforated protrusion (4) and **in that** its length is not less than that of the tensioner (100) in the transport condition.

12. A tensioner according to at least one of the preceding claims, further **characterised in that** it can be disabled by rotating the rod (7) to allow the second part (9) of the rod (7) to pass through the shaped slot (2) present in the body (3).

13. A tensioner according to at least one of the preceding claims, further **characterised in that** the stroke of the piston (6) when the tensioner (100) is disabled and the chain (20) is slack is limited by the protrusions (11) of the first part (8) of the rod (7) which rest on the body (3) and by the conical portion (10) of the second part (9) of the rod (7) which is in contact with the perforated protrusion (4).

14. A tensioner according to at least one of the preceding claims, further **characterised in that** it is adapted to be locked again by exerting a traction on the end of the first part (8) of the rod (7) to make said first part (8) to leave the shaped slot (2) and by rotating the rod (7) to cause the joining surface (12) of the rod (7) to rest against the body (3).

## Patentansprüche

1. Spanner (100) für eine Steuerkette (20) mit einer Vorrichtung (1) zur reversiblen Verriegelung, wobei der Spanner einen Spannerkörper, einen Spannerkolben (6) und einen von dem Spannerkolben (6) getragenen Schuh (5) aufweist; **dadurch gekennzeichnet, dass**
die Vorrichtung (1) zur reversiblen Verriegelung Folgendes umfasst:
- einen Körper (3) mit einem geformten Schlitz (2);
- einen perforierten Vorsprung (4), dessen Loch auf den geformten Schlitz (2) ausgerichtet ist; und
- eine Stange (7) mit einem ersten Teil (8), dessen Form mit der des geformten Schlitzes (2) komplementär ist, und einem zweiten Teil (9), der an einem Ende Mittel (10) trägt, die dazu ausgeführt sind, ihn irreversibel mit dem perforierten Vorsprung (4) zu verbinden;
wobei einer des Körpers (3) und des perforierten Vorsprungs (4) integral mit dem Spanner (100) ist und bezüglich des Spannerkörpers vorragt und der andere des Körpers (3) und des perforierten Vorsprungs (4) integral mit dem Schuh (5) ist und bezüglich des Schuhs (5) vorragt.

2. Spanner nach Anspruch 1, wobei der Körper (3) integral mit dem Spanner (100) ist und bezüglich des Spannerkörpers vorragt und der perforierte Vorsprung (4) integral mit dem Schuh (5) ist und bezüglich des Schuhs (5) vorragt.

3. Spanner nach Anspruch 1, wobei der perforierte Vorsprung (4) integral mit dem Spanner (100) ist und bezüglich des Spannerkörpers vorragt und der Körper (3) integral mit dem Schuh (5) ist und bezüglich des Schuhs (5) vorragt.

4. Spanner nach Anspruch 2, weiterhin **dadurch gekennzeichnet, dass** die Stange (7) aus Kunststoffmaterial hergestellt ist und dass der perforierte Vorsprung (4) aus dem Kunststoffmaterial hergestellt ist, das zur Herstellung oder Beschichtung des Schuhs (5) verwendet wird,

5. Spanner nach Anspruch 2, weiterhin **dadurch gekennzeichnet, dass** der Körper (3) einstückig mit dem Körper des Spanners (100) hergestellt ist.

6. Spanner nach Anspruch 2, weiterhin **dadurch gekennzeichnet, dass** der Körper (3) aus Kunststoffmaterial hergestellt und am Spanner (100) angebracht ist.

7. Spanner nach Anspruch 3, weiterhin **dadurch gekennzeichnet, dass** die Stange (7) aus Kunststoffmaterial hergestellt ist und der Körper (3) aus dem Kunststoffmaterial hergestellt ist, das zur Herstellung oder Beschichtung des Schuhs (5) verwendet wird.

8. Spanner nach mindestens einem der vorhergehenden Ansprüche, weiterhin **dadurch gekennzeichnet, dass** der erste Teil (8) der Stange (7) Mittel (11) aufweist, die zur Begrenzung seines Hubs in dem geformten Schlitz (2), wenn der Spanner (100) deaktiviert ist, ausgeführt sind.

9. Spanner nach Anspruch 8, weiterhin **dadurch gekennzeichnet, dass** die Mittel (11) aus einem Paar sich diametral gegenüberliegender Vorsprünge bestehen, die eine größere Länge als die Hauptachse des geformten Schlitzes (2) aufweisen und am ersten Teil (8) der Stange (7) vorgesehen sind.

10. Spanner nach Anspruch 9, weiterhin **dadurch gekennzeichnet, dass** der Hub des ersten Teils (8) im geformten Schlitz (2), wenn der Spanner (100) deaktiviert ist, durch die Vorsprünge (11) begrenzt wird und größer ist als der Hub des Kolbens (6), wenn der Spanner (100) deaktiviert ist und die Kette (20) locker ist.

11. Spanner nach mindestens einem der vorhergehenden Ansprüche, weiterhin **dadurch gekennzeichnet, dass** der zweite Teil (9) der Stange (7) zylindrisch ist und an einem Ende einen konischen Teil (10) trägt, der dazu ausgeführt ist, irreversibel in den perforierten Vorsprung (4) eingeführt zu werden, und dass seine Länge nicht geringer ist als die des Spanners (100) im Transportzustand.

12. Spanner nach mindestens einem der vorhergehenden Ansprüche, weiterhin **dadurch gekennzeichnet, dass** er deaktiviert werden kann, indem die Stange (7) gedreht wird, um zu gestatten, dass sich der zweite Teil (9) der Stange (7) durch den im Körper (3) ausgebildeten geformten Schlitz (2) erstreckt.

13. Spanner nach mindestens einem der vorhergehenden Ansprüche, weiterhin **dadurch gekennzeichnet, dass** der Hub des Kolbens (6), wenn der Spanner (100) deaktiviert ist und die Kette (20) locker ist, durch die Vorsprünge (11) des ersten Teils (8) der Stange (7), der am Körper (3) anliegt, und durch den konischen Teil (10) des zweiten Teils (9) der Stange (7), der den perforierten Vorsprung (4) beführt, begrenzt wird.

14. Spanner nach mindestens einem der vorhergehenden Ansprüche, weiterhin **dadurch gekennzeichnet, dass** er dazu ausgeführt ist, wieder verriegelt zu werden, indem eine Zugkraft an das Ende des ersten Teils (8) der Stange (7) angelegt wird, um zu bewirken, dass der erste Teil (8) den geformten Schlitz (2) verlässt, und indem die Stange (7) gedreht wird, um zu bewirken, dass die Verbindungsfläche (12) der Stange (7) am Körper (3) anliegt.

## Revendications

1. Tendeur (100) pour une chaîne de distribution (20) comprenant un dispositif de verrouillage réversible (1), le tendeur ayant un corps de tendeur, un piston de tendeur (6) et un sabot (5) porté par le piston de tendeur (6) ; **caractérisé en ce que** :
le dispositif de verrouillage réversible (1) comprend :
- un corps (3) ayant une fente façonnée (2) ;
- une saillie perforée (4) dont le trou est aligné avec la fente façonnée (2) ; et
- une tige (7) ayant une première partie (8) de forme complémentaire à celle de la fente façonnée (2) et une deuxième partie (9) portant à une extrémité des moyens (10) conçus pour l'accoupler de manière irréversible à la saillie perforée (4) ;
l'un du corps (3) et de la saillie perforée (4) étant intégré au tendeur (100) et faisant saillie par rapport au corps de tendeur et l'autre du corps (3) et de la saillie perforée (4) étant intégré au sabot (5) et faisant saillie par rapport au sabot (5).

2. Tendeur selon la revendication 1, dans lequel le corps (3) est intégré au tendeur (100) et fait saillie par rapport au corps de tendeur et la saillie perforée (4) est intégrée au sabot (5) et fait saillie par rapport au sabot (5).

3. Tendeur selon la revendication 1, dans lequel la saillie perforée (4) est intégrée au tendeur (100) et fait saillie par rapport au corps de tendeur et le corps (3) est intégré au sabot (5) et fait saillie par rapport au sabot (5).

4. Tendeur selon la revendication 2, **caractérisé en outre en ce que** la tige (7) est fabriquée en matériau plastique et **en ce que** la saillie perforée (4) est fabriquée en le matériau plastique utilisé pour fabriquer ou revêtir le sabot (5).

5. Tendeur selon la revendication 2, **caractérisé en outre en ce que** le corps (3) est fabriqué d'une seule pièce avec le corps du tendeur (100).

6. Tendeur selon la revendication 2, **caractérisé en outre en ce que** le corps (3) est fabriqué en matériau plastique et est appliqué sur le tendeur (100).

7. Tendeur selon la revendication 3, **caractérisé en outre en ce que** la tige (7) est fabriquée en matériau plastique et le corps (3) est fabriqué en le matériau plastique utilisé pour fabriquer ou revêtir le sabot (5).

8. Tendeur selon au moins l'une quelconque des revendications précédentes, **caractérisé en outre en ce que** la première partie (8) de la tige (7) a des moyens (11) conçus pour limiter sa course dans la fente façonnée (2) quand le tendeur (100) est désactivé.

9. Tendeur selon la revendication 8, **caractérisé en outre en ce que** les moyens (11) sont constitués d'une paire de saillies, diamétralement opposées et de plus grande longueur que le grand axe de la fente façonnée (2), présentes sur la première partie (8) de la tige (7).

10. Tendeur selon la revendication 9, **caractérisé en outre en ce que** la course de la première partie (8) dans la fente façonnée (2) quand le tendeur (100) est désactivé est limitée par les saillies (11) et est supérieure à la course du piston (6) lorsque le tendeur (100) est désactivé et que la chaîne (20) est lâche.

11. Tendeur selon au moins l'une quelconque des revendications précédentes, **caractérisé en outre en ce que** la deuxième partie (9) de la tige (7) est cylindrique et porte à une extrémité une portion conique (10) conçue pour être insérée de manière irréversible dans la saillie perforée (4) et **en ce que** sa longueur n'est pas inférieure à celle du tendeur (100) dans l'état de transport.

12. Tendeur selon au moins l'une quelconque des revendications précédentes, **caractérisé en outre en ce qu**'il peut être désactivé en faisant tourner la tige (7) pour permettre à la deuxième partie (9) de la tige (7) de passer travers la fente façonnée (2) présente dans le corps (3).

13. Tendeur selon au moins l'une quelconque des revendications précédentes, **caractérisé en outre en ce que** la course du piston (6) lorsque le tendeur (100) est désactivé et que la chaîne (20) est lâche est limitée par les saillies (11) de la première partie (8) de la tige (7) qui reposent sur le corps (3) et par la portion conique (10) de la deuxième partie (9) de la tige (7) qui est en contact avec la saillie perforée (4).

14. Tendeur selon au moins l'une quelconque des revendications précédentes, **caractérisé en outre en ce qu**'il est prévu pour être verrouillé à nouveau en exerçant une traction sur l'extrémité de la première partie (8) de la tige (7) pour que ladite première partie (8) sorte de la fente façonnée (2) et en faisant tourner la tige (7) pour que la surface de connexion (12) de la tige (7) repose contre le corps (3).
